# EUROPEAN PATENT SPECIFICATION

(11) **EP 3 970 991 B1**
(45) Date of publication and mention of the grant of the patent: **16.10.2024**
(21) Application number: 20806552.4
(22) Date of filing: 23.04.2020
(51) Int. Cl.: B60C 9/18, B60C 9/00, B60C 9/04, B60C 19/12

(54) **BICYCLE-TIRE REINFORCING PLY AND BICYCLE TIRE**
FAHRRADREIFENVERSTÄRKUNGSLAGE UND FAHRRADREIFEN
ÉLÉMENT DE RENFORCEMENT POUR PNEU DE BICYCLETTE ET PNEU DE BICYCLETTE

(30) Priority: 13.05.2019 JP 2019090836
(43) Date of publication of application: 23.03.2022
(73) Proprietor: Kuraray Co., Ltd., Kurashiki-shi, Okayama 710-0801 (JP)
(72) Inventor: TAKEMOTO, Shinichi, Okayama-shi, Okayama 702-8601 (JP); YORIMITSU, Shuhei, Okayama-shi, Okayama 702-8601 (JP); SUZUKI, Ushio, Osaka-shi, Osaka 530-8611 (JP); NAKAMURA, Takuji, Osaka-shi, Osaka 530-8611 (JP)
(74) Representative: Müller-Boré & Partner Patentanwälte PartG mbB
(86) International application number: PCT/JP2020/017479
(87) International publication number: WO 2020/230573

(56) References cited:
- EP-A2- 1 818 190
- WO-A1-2019/098121
- CN-Y- 201 136 412
- JP-A- 2006 265 745
- JP-A- H03 241 061
- JP-A- H1 016 523
- US-A1- 2007 068 614

## Description

### CROSS REFERENCE TO THE RELATED APPLICATION

This application is based on and claims Convention priority to Japanese patent application No. 2019-090836, filed May 13, 2019.

### BACKGROUND OF THE INVENTION

The present invention relates to a reinforcing ply capable of enhancing fracture resistance of a bicycle tire and to a bicycle tire having excellent fracture resistance.

Bicycle tires include a carcass part that forms a frame of the tire thereinside and a tread part on a side of a ground contact surface between the ground and the tire. In addition, a reinforcing ply is provided on the bicycle tire to protect the tire from stones, glass, metal pieces, etc. existing on the ground. However, there is a likelihood that lightweight properties required for a bicycle tire cannot be realized due to the presence of the reinforcing ply. Taking this problem into consideration, for example, Patent Document 1 (European Patent No. 1682362) discloses a bicycle tire comprising: a reinforcing ply which comprises multi filament threads of more than 30 thermoplastic liquid crystal polyester filaments; a tread portion; and a carcass portion.

The Patent Document 1 teaches that, since the reinforcing ply is constituted by multifilament threads of more than 30 thermoplastic liquid crystal polyester filaments, the bicycle tire has improved resistance to perforation with a reduced weight.

Another bicycle tire is known from EP 3711977 A, which is prio art according to Article 54(3) EPC. This bicycle tire is provided with a reinforcing ply comprising a woven fabric made of polyvinyl alcohol-series fiber yarns , wherein each of the yarns includes a plurality of single fibers having an average fiber diameter of 0.045 mm or smaller.

### RELATED ART DOCUMENT

### PATENT DOCUMENT

[Patent Document 1] European Patent No. 1682362

### SUMMARY OF THE INVENTION

### PROBLEMS TO BE SOLVED BY THE INVENTION

Patent Document 1, however, merely confirms the puncture resistance by pressing a blade-shaped stylus (Stichel) to the tire. On the other hand, there are many causes for puncture of tires (flat tire). For example, where a bicycle runs on an uneven surface or a step on the road surface, a tire puncture so-called pinch flat may occur, or the tire itself may be destroyed. Such a tire puncture/destruction occurs because fracture resistance of the bicycle tire is not good enough. Therefore, there is a demand for tires that are less likely to break down even when running on rough roads with obstacles such as stones and protrusions. In other words, development of a tire with high fracture resistance is desired.

Therefore, an object of the present invention is to provide a reinforcing ply contributing to improved fracture resistance of bicycle tires and to provide a bicycle tire having excellent fracture resistance.

### MEANS TO SOLVE PROBLEMS

The inventors of the present invention have conducted intensive studies to achieve the above object and have found that where a woven fabric comprising liquid crystalline polyester fiber yarns is used as a reinforcing ply for a bicycle tire in a condition that the liquid crystalline polyester fiber yarns have not only a specific average fiber diameter of single fibers but also a specific relationship between this average fiber diameter and the number of the single fibers in the fiber yarn, the woven fabric comprising liquid crystalline polyester fiber yarns can unexpectedly enhance fracture resistance of the bicycle tire.

Based on these findings, the present inventors have accomplished the present invention by providing a bicyle-tire reinforcing ply according to claim 1.

Preferably, when both surfaces of the woven fabric are provided with unvulcanized rubber sheets and are heated so as to be vulcanized under pressure to give a specimen having a thickness of 2 mm, the specimen has a maximum load of 850 N or more (preferably 870 N or more, more preferably 900 N or more, for example, 3000 N or less) in a penetration test.

Preferably, the woven fabric is a plain weave fabric or a cord fabric.

Preferably, the woven fabric is constituted by mutually intersecting the liquid crystalline polyester fiber yarns.

Preferably, the crystalline polyester fiber yarn has a twist number of 1 to 30 turns110 cm (preferably 2 to 20 turns/10 cm, more preferably 3 to 18 turns/10 cm).

Preferably, the number of single fibers per said fiber yarn is 29 or less.

Preferably, the single fibers have an average fiber diameter of 40 µm or larger.

Preferably, the reinforcing ply further comprising a woven fabric comprising polyvinyl alcohol-series fiber yarns, each of the fiber yarns comprising a plurality of single fibers having an average fiber diameter of 45 µm or smaller.

A bicycle tire at least comprising a tread part provided to a ground contact surface of the bicycle tire; and a carcass part provided inside the tread part, wherein the bicycle tire comprises a reinforcing ply as defined by any of claims 1-8 in at least one position selected from between the tread part and the carcass part, inside the carcass part, and inside the tread part.

### EFFECT OF THE INVENTION

According to a reinforcing ply of the present invention, the liquid crystalline polyester fiber yarns comprise single fibers having a specific average fiber diameter, and the number of single fibers included in the fiber yarn has a specific relationship with the average fiber diameter. Since such liquid crystalline polyester fiber yarns constitute the woven fabric, the reinforcing ply comprising the woven fabric can enhance fracture resistance of a bicycle tire. As a result, tire punctures caused by insufficient fracture resistance of bicycle tires, in particular pinch flat (punctures caused by making rim hit), can be advantageously prevented. In particular, the reinforcing ply of the present invention can further improve the fracture resistance of bicycle tires where the fiber diameter of the single fibers constituting the liquid crystalline polyester fiber yarn is larger.

### BRIEF, DESCRIPTION OF THE DRAWINGS

The present invention will be more clearly understood from the following description of preferred examples thereof, when taken in conjunction with the accompanying drawings. However, the examples and the drawings are given only for the purpose of illustration and explanation, and are not to be taken as limiting the scope of the present invention in any way whatsoever, which scope is to be determined by the appended claims. In the figures,
Fig. 1 shows a schematic sectional view of a bicycle tire according to an embodiment of the present invention;
Fig. 2 shows a schematic sectional view of a bicycle tire according to another embodiment of the present invention;
Fig. 3 shows a schematic sectional view of a bicycle tire according to another embodiment of the present invention; and
Fig. 4 shows a partial schematic sectional view of a constant-speed penetration test machine for illustrating a penetration test for a reinforcing ply.

### DESCRIPTION OF THE EMBODIMENTS

### Reinforcing Ply (Plies)

A reinforcing ply of the present invention is a bicycle-tire reinforcing ply (plies), the reinforcing ply at least comprising a woven fabric that comprises liquid crystalline polyester fiber yarns, each of the fiber yarns being formed from 3 or more single fibers. It should be noted that the reinforcing ply or plies may comprise one or more layers of woven fabrics. Where a plurality of layers of woven fabrics are included in a reinforcing ply, it may only include woven fabrics comprising liquid crystalline polyester fiber yarns or may include a combination of a woven fabric comprising liquid crystalline polyester fiber yarns and a woven fabric comprising a material other than the liquid crystalline polyester fiber yarns.

### Liquid Crystalline Polyester Fiber Yarn

The liquid crystalline polyester fiber yarn comprises 3 or more single fibers of liquid crystalline polyester. The liquid crystalline polyester fiber may be any fiber of a thermoplastic polymer capable of forming an optically anisotropic molten phase. For example, preferable one may include a wholly aromatic polyester fiber (polyarylate fiber) having a thermoplastic property.

The liquid crystalline polyester fiber (for example, wholly aromatic polyester fiber) can be obtained by melt spinning the liquid crystalline polyester (for example, wholly aromatic polyester). The wholly aromatic polyester comprises repeating structural units derived from, for example, aromatic diols, aromatic dicarboxylic acids, aromatic hydroxycarboxylic acids, etc. The chemical structure of the repeating structural units derived from aromatic diols, aromatic dicarboxylic acids, or aromatic hydroxycarboxylic acids is not limited to a specific one as long as it does not undermine the effects of the present invention. Further, the wholly aromatic polyester may contain structural units derived from aromatic diamines, aromatic hydroxyamines, or aromatic aminocarboxylic acids in a range which does not spoil the effect of the present invention. Examples of preferable structural units may include units shown in Table 1.

**Table 1**

| |
|---|
| 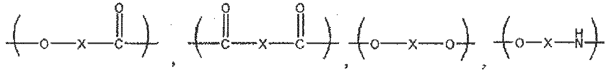 |
| In the formula, X is selected from the following structures. |
| 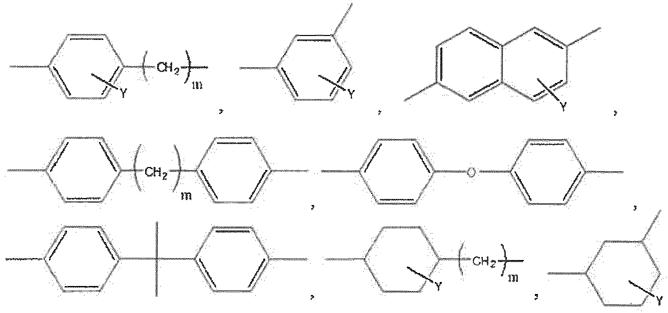 |
| m is an integer from 0 to 2, Y is a substituent selected from hydrogen atom, halogen atoms, alkyl groups, aryl groups, aralkyl groups, alkoxy groups, aryloxy groups, aralkyloxy groups. |

In the structural units of Table 1, m is an integer of 0 to 2. Further, Y in the formulae independently represents, as from one substituent to a replaceable maximum number of substituents, hydrogen atom, a halogen atom (for example, fluorine atom, chlorine atom, bromine atom, iodine atom, etc.), an alkyl group (for example, an alkyl group having 1 to 4 carbon atoms such as methyl group, ethyl group, isopropyl group, t-butyl group, etc.), an alkoxy group (for example, methoxy group, ethoxy group, isopropoxy group, n-butoxy group, etc.), an aryl group (for example, phenyl group, naphthyl group, etc.), an aralkyl group [benzyl group (phenylmethyl group), phenethyl group (phenylethyl group), etc.], an aryloxy group (for example, phenoxy group, etc.), an aralkyloxy group (for example, benzyloxy group, etc.), and the like.

More preferable structural units may include the structural units described in Examples (1) to (18) shown in Tables 2, 3, and 4 below. Where the structural unit in the formula is a structural unit capable of configuring a plurality of structures, two or more such structural units may be combined and used as the structural unit constituting the polymer.

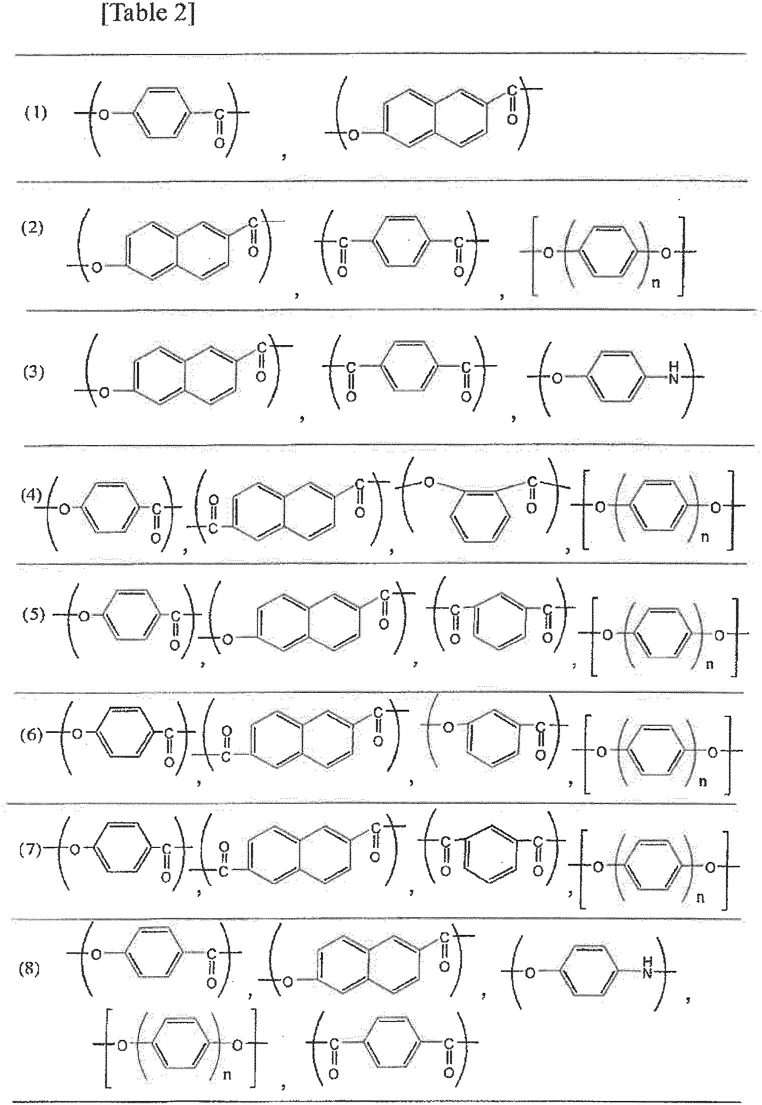

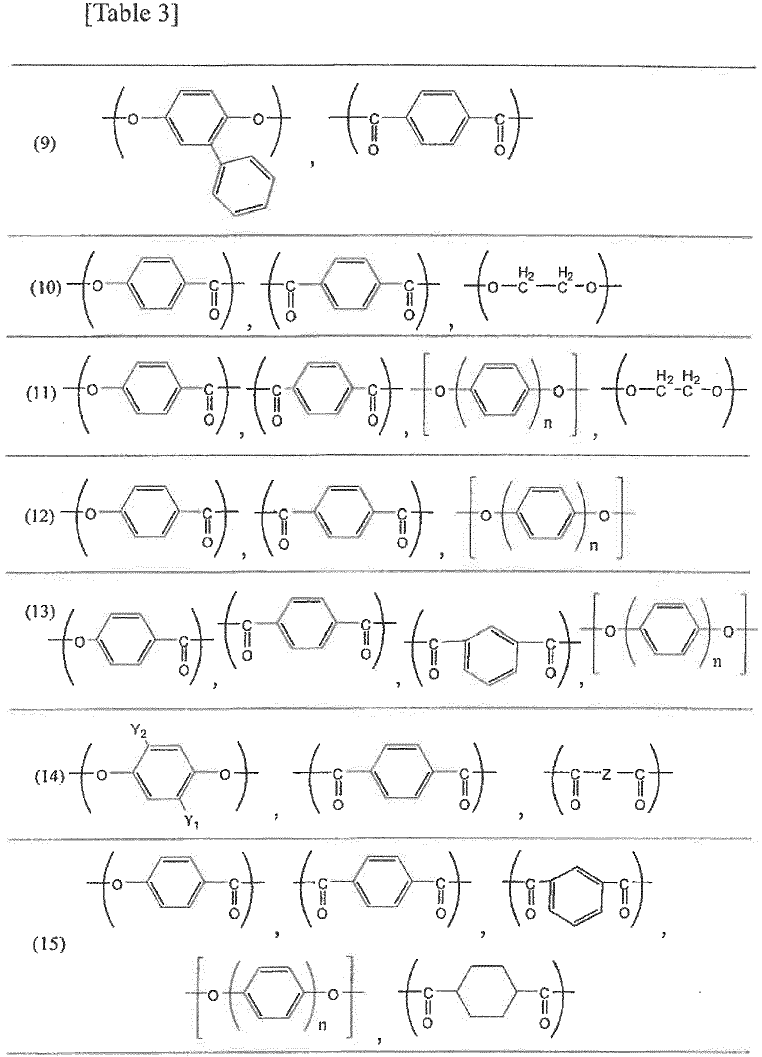

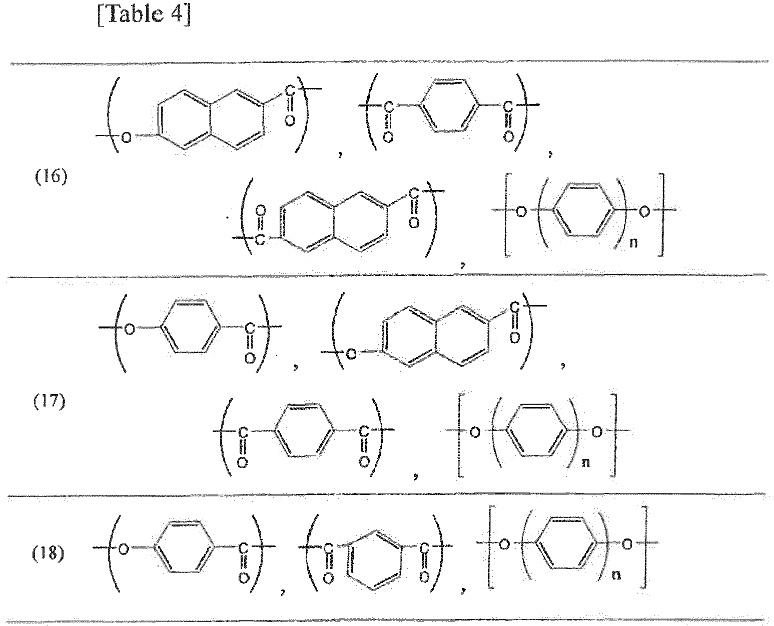

In the structural units of Tables 2, 3, and 4, n is an integer of 1 or 2, among each of the structural units, n = 1 and n = 2 may independently exist, or may exist in combination; each of the Y₁ and Y₂ independently represents, hydrogen atom, a halogen atom (for example, fluorine atom, chlorine atom, bromine atom, iodine atom, etc.), an alkyl group (for example, an alkyl group having 1 to 4 carbon atoms such as methyl group, ethyl group, isopropyl group, t-butyl group, etc.), an alkoxy group (for example, methoxy group, ethoxy group, isopropoxy group, n-butoxy group, etc.), an aryl group (for example, phenyl group, naphthyl group, etc.), an aralkyl group [benzyl group (phenylmethyl group), phenethyl group (phenylethyl group), etc.], an aryloxy group (for example, phenoxy group, etc.), an aralkyloxy group (for example, benzyloxy group, etc.), and the like. Of these, preferable one may include hydrogen atom, chlorine atom, bromine atom, or methyl group.

Further, Z may include substituents represented by the following formulae.

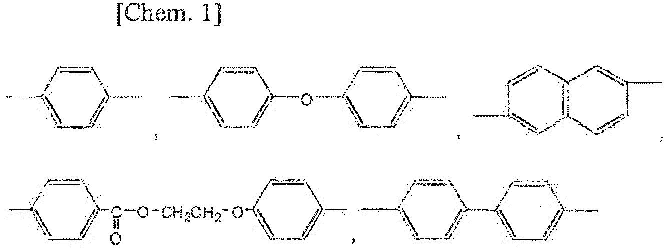

Preferable wholly aromatic polyester may comprise a combination of a structural unit having a naphthalene skeleton. Especially preferable one may include both the structural unit (A) derived from hydroxybenzoic acid and the structural unit (B) derived from hydroxynaphthoic acid. For example, the structural unit (A) may have a following chemical formula (A), and the structural unit (B) may have a following chemical formula (B). From the viewpoint of improving melt-spinnability, the ratio of the structural unit (A) and the structural unit (B) may be preferably in the range of former/latter of from 9/1 to 1/1, more preferably from 7/1 to 1/1, and even more preferably from 5/1 to 1/1.

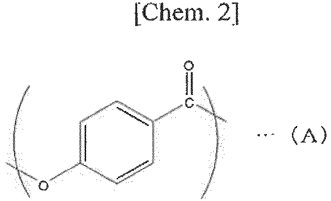

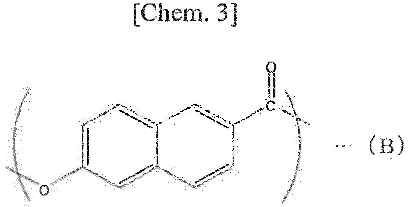

Further, the total proportion of the structural units of (A) and (B) may be, based on all the structural units, for example, for example, 65 mol% or more, more preferably 70 mol% or more, and further preferably 80 mol% or more. Among the liquid crystalline polyester, a wholly aromatic polyester having the structural unit (B) at a proportion of from 4 to 45 mol% is particularly preferable.

The melting point of the wholly aromatic polyester preferably used in the present invention is preferably in the range of from 250 to 360°C, more preferably from 260 to 320°C. The melting point referred to here is a main absorption peak temperature observed by measuring using a differential scanning calorimeter (DSC) in accordance with JIS K 7121 test method. Specifically, after taking 10 to 20 mg of a sample encapsulated in an aluminum pan into the DSC device, nitrogen is introduced as a carrier gas at a flow rate of 100 mL/min. and a heating rate of 20°C/min., the position of an appearing endothermic peak is measured. In some kinds of polymer, where a clear peak does not appear in the first run in the DSC measurement, it is advisable that after heating the sample to a temperature 50°C higher than the flow temperature expected with a heating rate of 50°C/min. and retaining at that temperature for 3 minutes so as to make the sample to be completely molten, and the melt is quenched to 50°C at a rate of -80°C/min. Subsequently, the quenched material is reheated at a heating rate of 20°C/min., and the position of an appearing endothermic peak may be recorded.

As long as the effects of the present invention are not impaired, the above liquid crystalline polyester (particularly, wholly aromatic polyester) may be blended with thermoplastic polymers such as a polyethylene terephthalate, a modified polyethylene terephthalate, a polyolefin, a polycarbonate, a polyamide, a polyphenylene sulfide, a polyether ether ketone, a fluoro-resin, etc. Further, the above liquid crystalline polyester may be combined with various additives such as inorganic substances (for example, titanium oxide, kaolin, silica, barium oxide), carbon black, colorants such as dyes and pigments, antioxidants, ultraviolet absorbers, and light stabilizers.

In the present invention, method of producing fibers from the liquid crystalline polyester is not limited to a specific one as long as liquid crystalline fibers have a property of being meat-meltable at least at a part of the fiber surface. Usually, fibers obtained by melt spinning can be used. Melt spinning can be performed by a known or conventional method, for example, in the melt spinning, a fiber-formable resin is melted in an extruder and thereafter the melt is discharged from a nozzle at a predetermined spinning temperature so as to obtain a liquid crystalline polyester fiber.

The liquid crystalline polyester fiber yarn comprises three or more single fibers, and the average fiber diameter of the single fibers is 25 µm or larger. In order for the liquid crystalline polyester fiber yarn to exhibit fracture resistance when used as a reinforcing ply, the average fiber diameter of the single fibers constituting the liquid crystalline polyester fiber yarn and the number of single fibers have a specific relationship such that the product of the number of single fibers and the average fiber diameter (µm) is 1700 or less. That is, [No. of single fibers per fiber yarn] × [average fiber diameter (µm)] ≤ 1700. This indicates that an inverse proportional relationship is established between the average fiber diameter and the number of single fibers in order to exhibit fracture resistance when used as a reinforcing ply.

That is, in the present invention, where the average fiber diameter of the single fibers is 25 µm or larger, the load that can be supported by the fiber yarns constituted by these single fibers can be increased. On the other hand, since this reinforcing ply is used for bicycle tires, there is an upper limit to the size of the average fiber diameter and the number of single fibers constituting the fiber yarn in forming the fiber yarn. However, by adjusting the size of the average fiber diameter and the number of single fibers constituting the fiber yarn within a specific range, it is possible to improve the fracture resistance when used as a reinforcing ply while well-enabling forming a woven fabric as the fiber yarn.

The average fiber diameter of the liquid crystalline polyester single fibers constituting the liquid crystalline polyester fiber yarn may be preferably 28 µm or larger, more preferably 35 µm or larger, still more preferably 40 µm or larger, and particularly preferably 42 µm or larger. The upper limit of the average fiber diameter of the liquid crystalline polyester single fibers can be appropriately set depending on the number of the liquid crystalline polyester single fibers, and may be, for example, 500 µm or smaller, preferably 300 µm or smaller, more preferably 100 µm or smaller, still more preferably about 60 µm or smaller. The average fiber diameter is a value measured by the method described in Examples below. It should be noted that where the liquid crystalline polyester single fiber has a modified cross section, the fiber diameter of the single fiber may be a value measured from a circumscribed circle diameter of the cross-sectional shape.

The number of liquid crystalline polyester single fibers constituting the liquid crystalline polyester fiber yarn can be appropriately set depending on the average fiber diameter of the liquid crystal polyester single fibers, and may be preferably 5 or more, and more preferably 7 or more. The upper limit of the number of single fibers can be appropriately set depending on the average fiber diameter of the liquid crystalline polyester single fibers, and may be, for example, 60 or less, preferably 40 or less, more preferably 29 or less.

The product of the number of single fibers in the fiber yarn and the average fiber diameter (µm) can be appropriately set depending on the values of the average fiber diameter and the number of single fibers, and may be preferably about 250 to 1700, more preferably about 300 to 1500.

The fiber yarns are not particularly limited as long as they can be used as weaving yarns, and may be any of filament yarns, spun yarns, and composite yarns, and the fiber yarns are preferably filament yarns.

The fiber yarns may be untwisted or twisted to have the number of twists of, for example, 1 to 30 turns/10 cm, preferably 2 to 20 turns/10 cm, more preferably 3 to 18 turns/10 cm. Although the warp yarns and the weft yarns may be twisted in the same direction or in different directions, they may preferably be twisted in the same direction. It should be noted that the number of twists (times/cm) indicates the number of twists included in the fiber yarns of 10 cm, which is a value measured by the method described in Examples below.

For example, the liquid crystalline polyester fiber yarns may have a fiber tenacity of, for example, 15 cN/dtex or higher, preferably 18 cN/dtex or higher, and more preferably 20 cN/dtex or higher. Although an upper limit for the fiber tenacity is not particularly limited, the fiber tenacity may be, for example, 50 cN/dtex or lower, or 40 cN/dtex or lower. It should be noted that the fiber tenacity is measured in accordance with the method described in the Examples below.

The liquid crystalline polyester fiber yarns may be subjected to post-processing if needed. Preferable post-processing may include bulk texturing such as, for example, twisting/thermally fixing/untwisting, false twisting, stuffing, shaping, edge-crimping, and taslanizing. Of these post-processing, taslanizing is preferred which does not cause stretching and/or shrinkage of fibers. In the taslanizing texturing, high-pressure turbulent air is applied to bundle of filaments in parallel to make the filaments entangled, so that bulky texture can be imparted to the filaments.

The woven fabric may have a sheet form in which warp yarns and weft yarns are interlaced in accordance with a predetermined rule. For example, woven fabric weaves may include a plain weave, a twill weave, a satin weave, and a cord weave, and the plain weave and the cord weave are preferred. The liquid crystalline polyester fiber yarns may be used for both warp yarns and weft yarns or either warp yarns or weft yarns. The liquid crystalline polyester fiber yarns are preferably used at least for warp yarns; more preferably, the liquid crystalline polyester fiber yarns are interlaced with each other; and, most preferably, the whole woven fabric is made of the liquid crystalline polyester fiber yarns.

Further, the warp and/or weft yarns constituting the woven fabric preferably have a flattened shape [for example, a shape in which the yarn width (the maximum diameter of the fiber yarn) of the warp and/or weft yarns is 2 to 10 times larger than the yarn thickness (the minimum diameter of the fiber yarn) of the warp and/or weft yarns]. For example, the yarn width of the warp and/or weft yarns may be about 0.1 to 3.0 mm, more preferably about 0.15 to 2.0 mm.

In order to suppress gaps appeared in a weave, the woven fabric may have a warp yarn density of, for example, 40 yarns/2.54 cm or greater and preferably 45 yarns/2.54 cm or greater. Although the upper limit of the warp yarn density may be suitably selected depending on types of woven fabrics, the warp yarn density may be, for example, 90 yarns/2.54 cm or less. The warp yarn density is measured in accordance with the method described in the Examples below.

In order to achieve a desired fracture resistance, the woven fabric may have a basis weight of preferably 70 g/m² or greater, more preferably 80 g/m² or greater, and still more preferably 90 g/m² or greater. On the other hand, in terms of weight reduction of the tire, the woven fabric may have a basis weight of preferably 300 g/m² or lower, preferably 250 g/m² or lower, and still more preferably 200 g/m² or lower. The basis weight is measured in accordance with the method described in the Examples below.

In terms of weight lightening, the woven fabric used per one tire may have a weight (unit: g) of, for example, 15 × L or lower, preferably 10 × L or lower, and more preferably 5 × L or lower and may be, for example, 2 × L or greater, where L denotes a circumference (unit: m) of the tire. For general bicycles, the weight of the woven fabric may be, for example, 30 g or lower, more preferably 20 g or lower, and even more preferably 10 g or lower, and may be, for example, 5 g or greater.

In order to achieve a desired fracture resistance and a desired thinness in a compatible manner, the woven fabric may have a thickness of, for example, about 0.10 to 1.00 mm, preferably about 0.15 to 0.80 mm, and more preferably about 0.20 to 0.60 mm.

Further, in addition to the woven fabric constituted by the liquid crystalline polyester fiber yarns, a woven fabric of polyvinyl alcohol-series (PVA-series) fiber yarns constituted by a plurality of single fibers having an average fiber diameter of 45 µm or less may be further included in the reinforcing ply. Since the woven fabric of the PVA-series fiber yarns has excellent puncture resistance, such a reinforcing ply can exhibit a desired fracture resistance and a desired puncture resistance in a compatible manner. The woven fabric constituted by the PVA-series fiber yarns can be produced depending on the production conditions of the woven fabric constituted by the liquid crystal polyester fiber yarns.

The obtained woven fabric may be directly used as a reinforcing ply, or, if needed, the woven fabric (i) may be subjected to pretreatment, such as resorcinol formalin (formaldehyde) latex (RFL) treatment to be used as a reinforcing ply, and/or (ii) may be provided with a rubber layer on at least one surface of the woven fabric to be used as a reinforcing ply. By performing the pretreatment of (i) above, the adhesiveness with the rubber layer can be improved.

The RFL treatment can be performed by immersing the woven fabric into a solution for RFL treatment (or RFL solution) or applying the RFL solution to the woven fabric. An adhesiveness improver for polyester fibers, such as a chlorphenol-based adhesive, may be added to the RFL solution. Such an adhesive improver for polyester fibers is marketed as, for example, Denabond (trade name) from Nagase ChemteX Corporation. The molar ratio of [R (resorcinol)IF (formaldehyde)] in the RFL solution may be in a range of, for example, from 1.0/1.0 to 1.0/4.5, preferably from 1.0/1.3 to 1.0/3.5, and more preferably from 1.011.5 to 1.0/2.0. Further, a weight ratio of [RF (resorcinol and formaldehyde)/L (latex)] may be in a range of, for example, from 1/2 to 1/8, preferably from 1/3 to 1/7, and more preferably from 1/4 to 1/6. The solid content weight ratio of [RFL / adhesiveness improver for polyester fiber] may be in a range of, for example, from 10/1 to 10/10, and preferably from 10/2 to 10/7.

Various types of rubber latex may be used as the latex, including, for example, a natural rubber latex, a styrene-butadiene rubber latex, an acrylonitrile-butadiene rubber latex, a chloroprene rubber latex, a vinyl pyridine-styrene-butadiene rubber latex, and an ethylene-propylene-nonconjugated diene terpolymer rubber latex. These types of rubber latex may be used singly or in combination. Among these, it is preferred to use a styrene-butadiene rubber latex or a vinyl pyridine-styrene-butadiene terpolymer rubber latex.

It should be noted that preprocessing may be performed using an epoxy compound and/or an isocyanate compound prior to the RFL treatment, if needed. In such preprocessing, the epoxy compound and/or the isocyanate compound may be applied by mixing a known or conventional compound into an organic solvent or water and immersing the woven fabric into the obtained treatment solution or coating the solution to the woven fabric. As the water-soluble aliphatic epoxy resin, for example, the Denacol series manufactured by Nagase ChemteX Corporation can be used.

Where the woven fabric in combination with a rubber layer(s) is used as a reinforcing ply, the rubber layer may be provided to, for example, only one surface or both surfaces of the woven fabric. The rubber layer may be, for example, in the form of a sheet-like product having a thickness in a range from about 0.10 to 1.50 mm, preferably from about 0.20 to 1.30 mm, and even more preferably from about 0.30 to 1.20 mm. The rubber layer preferably covers the whole woven fabric.

Examples of rubber constituting the rubber layer may include a natural rubber, a styrene-butadiene rubber, an acrylonitrile-butadiene rubber, a chloroprene rubber, a vinyl pyridine-styrene-butadiene rubber, and an ethylene-propylene-nonconjugated diene terpolymer rubber as a single body or a blend of two or more rubbers. The rubber is preferably a vulcanizable rubber. From the viewpoint of adhesive property, the rubber layer is preferably a layer of vulcanized rubber that is heated under pressure.

Where the reinforcing ply comprises an RFL-treated woven fabric in combination with a rubber layer(s), the rubber latex used in the RFL treatment may be the same type as the rubber(s) of the rubber layer(s), or may be different type from the rubber(s) of the rubber layers. Preferably, the rubber latex used in the RFL treatment may be the same type as the rubber(s) of the rubber layer(s).

Where the rubber layer is provided, the reinforcing ply including the woven fabric and the rubber layer(s) may have a total thickness, for example, in a range from 0.20 to 3.50 mm, preferably from 0.40 to 3.00 mm, and even more preferably from 0.60 to 2.50 mm.

For example, where a specimen is prepared by superposing unvulcanized rubber sheets on both surfaces of the woven fabric and heating the superposed material under pressure to make the rubber sheets vulcanized, the specimen (15 cm long × 15 cm wide, about 2 mm thick) in which the rubber sheets are integrated to the woven fabric may have a maximum load of, for example, preferably 850 N or higher, more preferably 870 N or higher, and even more preferably 900 N or higher in the penetration test in which a plunger (a cylindrical object with a spherical tip with a diameter of 8 mm) is applied to the center of the woven fabric in the condition that the periphery of the specimen, excluding a circle having a diameter of 40 mm at the center of the specimen, is fixed. Although the higher maximum load is more preferable, the usual maximum load is about 3000 N. The maximum load may be measured in accordance with the method described in the Examples below. It should be noted that the specimen is heated under pressure in a mold so as to have a thickness adjusted to about 2 mm (1.9 to 2.3 mm).

### Bicycle Tire

A bicycle tire according to the present invention at least comprises: a tread part provided to a ground contact surface of the bicycle tire; and a carcass part provided inside the tread part, wherein the bicycle tire comprises the reinforcing ply in at least one position selected from between the tread part and the carcass part, inside the carcass part, and inside the tread part. The bicycle tire may have a thickness, for example, from 1.0 to 10.0 mm, preferably from 1.2 to 7.0 mm, more preferably from 1.5 to 5.0 mm, where the thickness of the bicycle tire is measured at the ground contact surface.

The tread part is typically made of rubber. The carcass part at least includes a woven fabric, and if necessary, the woven fabric may be surrounded by a rubber layer(s) as a cover. The rubber constituting the rubber layer of the reinforcing ply may be the same type as the rubber(s) constituting the tread part and/or the carcass part, or may be different type from the rubber(s) constituting the tread part and/or the carcass part. Preferably, the rubber constituting the rubber layer of the reinforcing ply may be the same type as the rubber(s) constituting the tread part and/or the carcass part.

The reinforcing ply is preferably disposed such that a direction of the warp yarns of the woven fabric is diagonal to a center line of the tire cross section in a circumferential direction. The direction of the warp yarns of the woven fabric may be angled relative to the center line at an angle, for example, from 30 to 60° and preferably from 40 to 50°.

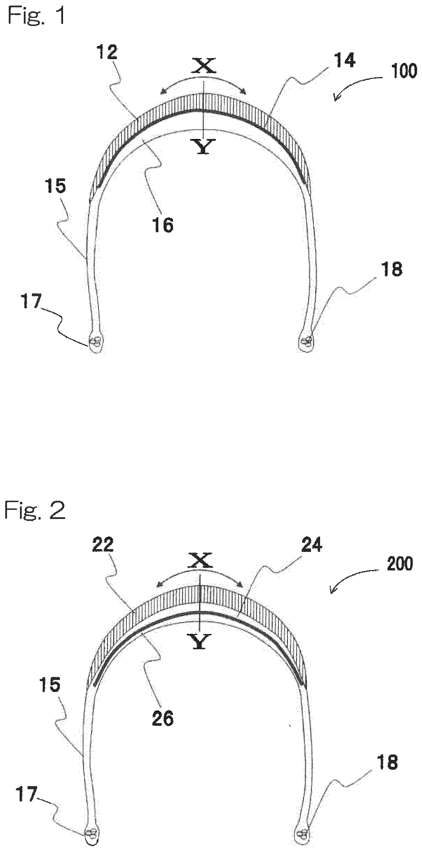

Hereinafter, embodiments of the bicycle tire of the present invention will be described with reference to the drawings. It should be noted that the present invention is not limited to the illustrated embodiments. In Figs. 1 to 3, like reference numerals are used to denote like features, and description thereof is omitted.

Fig. 1 shows a schematic sectional view of a bicycle tire according to a first embodiment of the present invention. As shown in Fig. 1, a bicycle tire 100 according to the first embodiment of the present invention includes: a tread part 12 configured to be in contact with the ground; and a carcass part 16 that is a frame part of the tire. The carcass part 16 is provided under the tread part 12 towards a direction of a rotary shaft of the bicycle tire, and the reinforcing ply 14 is disposed between the tread part 12 and the carcass part 16.

The carcass part 16 may be, for example, formed in such a way that one or more layers of carcass woven fabrics are covered by a rubber layer(s) each having a predetermined thickness. If needed, the carcass woven fabric(s) may embrace bead wires 18 at opposite ends of the carcass part 16. Examples of the bead wires 18 may include metal wires, and organic-fiber ropes or inorganic-fiber ropes.

For example, the bicycle tire 100 shown in Fig. 1 is a skin sidewall tire, and the carcass part 16 include: sidewall parts 15 that are side surfaces of the tire; and bead parts 17 that are fixing parts to a rim (not illustrated). In the bead parts 17, opposite parts of the carcass woven fabric (not illustrated) constituting the carcass part 16 embrace the bead wires 18, respectively, and the carcass woven fabric and the bead wires 18 are integrated by allowing them to be covered with rubber from outside to form the bead parts 17.

Although the tread part 12 only needs to be provided to a portion that comes into direct contact with the road, it may extend toward the sidewall parts 15, if needed. In terms of weight reduction, it is preferable that the tread part is principally provided to the ground contact part of the tire, and that the tread part may have extended parts toward each sidewall part in a width direction, in which each of the extended part has a width of equal to or smaller than a half of the width of the sidewall part.

Where the reinforcing ply 14 is provided outside the carcass part 16 and inside the tread part 12 (i.e., where the reinforcing ply 14 is provided between the carcass part 16 and the tread part 12), the reinforcing ply 14 is preferably provided within a range smaller than the width of the tread part 12 such that the reinforcing ply is substantially centered at the center line Y of the tire cross section shown in Fig. 1 in the circumferential direction X. For example, the reinforcing ply 14 may have a width in a range from 70 to 100% of the width of the tread part 12, preferably from 75% to 98%, and more preferably from 80 to 95%. It should be noted that each of these widths refers to a length between opposite ends of each part in the circumferential direction X in the tire cross section shown in Fig. 1 (that is, the longitudinal length of the width when the part in the width direction is longitudinally straightened).

Fig. 2 shows a schematic sectional view of a bicycle tire according to a second embodiment of the present invention. As shown in Fig. 2, a bicycle tire 200 according to the second embodiment of the present invention includes: a tread part 22 configured to be in contact with the ground; and a carcass part 26 that is a frame part of the tire. The reinforcing ply 24 is disposed inside the carcass part 26.

The carcass part 26 may include a plurality of carcass woven fabrics (not illustrated) in at least a position where the reinforcing ply 24 is disposed. In such a case, the reinforcing ply 24 may be interposed between the carcass woven fabrics inside the carcass part 26. Preferably, the reinforcing ply 24 is provided inside the carcass part 26 such that the reinforcing ply 24 is substantially centered at the center line Y of the tire cross section shown in Fig. 2 in the circumferential direction X. For example, the reinforcing ply 24 may have a width in a range from 70 to 200% of the width of the tread part 22, preferably from 75 to 150%, and more preferably 80 to 130%. It should be noted that each of these widths refers to a length between opposite ends of each part of the tire cross section in the circumferential direction X.

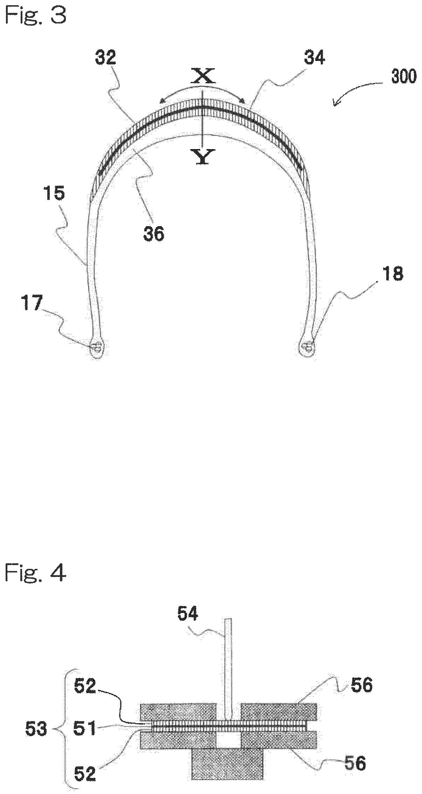

Fig. 3 shows a schematic sectional view of a bicycle tire according to a third embodiment of the present invention. As shown in Fig. 3, a bicycle tire 300 according to the third embodiment of the present invention includes: a tread part 32 configured to be in contact with the ground; and a carcass part 36 that is a frame part of the tire. The reinforcing ply 34 is disposed inside the tread part 32.

The reinforcing ply 34 may be provided inside the tread part 32 such that the reinforcing ply 34 is substantially centered at the center line Y of the tire cross section shown in Fig. 3 in the circumferential direction X. For example, the reinforcing ply 34 may have a width in a range from 60 to 95% of the width of the tread part 32, preferably from 65 to 90%, and more preferably from 70 to 85%. It should be noted that each of these widths refers to a length between opposite ends of each part of the tire cross section in the circumferential direction X.

Where the tread part 32 is provided with groove parts, the reinforcing ply 34 is preferably disposed to such an extent that the reinforcing ply 34 is not exposed outside the groove part.

### EXAMPLE

Hereinafter, the present invention will be further described in detail with reference to Examples, which are not to be construed as limiting the scope of the present invention. In the following Examples and Comparative Examples, various physical properties were measured by the following methods.

### Average Fiber Diameter (µm)

Using an X-ray CT apparatus, cross sections of 5 fiber yarns that were randomly sampled from warp yarns and weft yarns of a woven fabric were observed to take two-dimensional images of the cross sections of 5 fiber yarns. In the two-dimensional images, 10 single fibers were randomly selected from each of the 5 fiber yarns, and fiber diameter of each of the single fibers were measured, and the resulting 50 fiber-diameter data were averaged up so as to obtain an average fiber diameter. When the number of single fibers constituting one fiber yarn is less than 10, all of the single fibers constituting the fiber yarn are subjected to measurement of fiber diameter, and all the resulting fiber-diameter data obtained from 5 fiber yarns were averaged up so as to obtain an average fiber diameter.

### Fiber Tenacity (cN/dtex)

In accordance with section 8.5.1 of JIS L 1013 "Testing methods for chemical fiber filament yarns," a fiber tenacity was measured.

### Thread Width (mm)

A woven fabric was placed on a flat table to remove unnatural wrinkles and tension, and thereafter, three different locations of the woven fabric were observed using a digital microscope (VHX-2000, manufactured by Keyence Corporation) that had a measurement function. In such a manner, thread width of 5 fiber yarns per one location were measured, and the resulting 15 thread-width data were averaged up so as to obtain a thread width per fiber yarn.

### Warp Yarn Density (number of warp yarns/2.54 cm)

In accordance with section 8.6.1 of JIS L 1096 "Testing methods for general woven fabrics," a warp yarn density was measured.

### Twist Number (turns/10 cm)

Referring to section 8.13 of JIS L 1013 "Testing methods for chemical fiber filament yarns," number of twists included in 10 cm fiber yarn was measured by setting the gripping interval of the twisting machine to 10 cm.

### Basis Weight (g/m²)

In accordance with section 8.3.2 of JIS L 1096 "Testing methods for general woven fabrics," a basis weight of a woven fabric was measured.

### Thickness (mm)

In accordance with section 8.4 of JIS L 1096 "Testing methods for general woven fabrics," a thickness of a woven fabric was measured.

### Maximum Load (N)

A specimen (15 cm long × 15 cm wide, 2 mm thick) was obtained by preparing a woven fabric and unvulcanized rubber sheets each having a thickness of 1 mm and containing sulfur (containing natural rubber (RSS#3) and SBR rubber (commercial name "Nipol 1500") mixed at a weight ratio of 1/1); arranging the rubber sheets on both sides of the woven fabric; placing the woven fabric and the rubber sheets in a mold capable of producing a specimen having a thickness of 2 mm; and heating them at a temperature of 150°C and pressure of 50 kg/cm² for 30 minutes such that the rubber sheets were vulcanized and bonded to the woven fabric by thermocompression to be integrated together. The woven fabric was previously subjected to the RFL treatment (the molar ratio of R/F: 1/1.7; the weight ratio of RF/L: 1/5). For "Vectran" ^{™} and "Kevlar" ^{™}, Denabond (trade name) manufactured by Nagase ChemteX Corporation was added to the RFL treatment liquid as an adhesion improver for polyester ([RFL/Denabond solid content weight ratio] = 10/4). A penetration test was performed to the obtained specimen, as shown in Fig. 4, using a constant-speed penetration test machine with a plunger (diameter of spherical tip: 8 mm).

Fig. 4 shows a schematic sectional view of the constant-speed penetration test machine. A specimen 53 includes: a woven fabric 51 and vulcanized rubber layers 52, 52 on upper and lower surfaced of the woven fabric 51. The constant-speed penetration test machine includes: a plunger 54 that moves down at a constant speed, and fixing plates 56, 56 that fix the specimen 53 on the upper and lower surfaces, respectively. The periphery of the specimen 53, excluding a circle having a diameter of 40 mm at the center of which the plunger 54 penetrates, is fixed with the fixing plates 56, 56. A force with which the plunger 54 moving down at a speed of 5 cm per minute penetrated the specimen 53 was measured as a maximum load.

### Example 1

A plain weave fabric was prepared from "Vectran" ^{™} filaments (average single fiber diameter: 49 µm; number of single fibers per fiber yarn: 10; twist number: 10 turns/10 cm; fiber tenacity: 22.9 cN/dtex; manufactured by Kuraray Co., Ltd.) as liquid crystalline polyester fiber yarns for warp yarns and weft yarns. The obtained plain weave fabric had flattened shaped warp yarns and weft yarns. Table 5 shows performance evaluation of the obtained plain weave fabric.

### Example 2

A plain weave fabric was prepared from "Vectran" ^{™} filaments (average single fiber diameter: 30 µm; number of single fibers per fiber yarn: 27; twist number: 10 turns/10 cm; fiber tenacity: 22.9 cN/dtex; manufactured by Kuraray Co., Ltd.) as liquid crystalline polyester fiber yarns for warp yarns and weft yarns. The obtained plain weave fabric had flattened shaped warp yarns and weft yarns. Table 5 shows performance evaluation of the obtained plain weave fabric.

### Example 3

A cord fabric was prepared from "Vectran" ^{™} filaments (average single fiber diameter: 43 µm; number of single fibers per fiber yarn: 27; twist number: 15 turns/10 cm; fiber tenacity: 22.9 cN/dtex; manufactured by Kuraray Co., Ltd.) as liquid crystalline polyester fiber yarns for warp yarns and weft yarns. The obtained cord fabric had flattened shaped warp yarns. Table 5 shows performance evaluation of the obtained cord fabric.

### Example 4

A cord fabric was prepared from "Vectran" ^{™} filaments (average single fiber diameter: 32 µm; number of single fibers per fiber yarn: 50; twist number: 15 turns/10 cm; fiber tenacity: 22.9 cN/dtex; manufactured by Kuraray Co., Ltd.) as liquid crystalline polyester fiber yarns for warp yarns and weft yarns. The obtained cord fabric had flattened shaped warp yarns. Table 5 shows performance evaluation of the obtained cord fabric.

### Comparative Example 1

A plain weave fabric was prepared from "Vectran" ^{™} filaments (average single fiber diameter: 23 µm; number of single fibers per fiber yarn: 48; twist number: 10 turns/ 10 cm; fiber tenacity: 22.9 cN/dtex; manufactured by Kuraray Co., Ltd.) as liquid crystalline polyester fiber yarns for warp yarns and weft yarns. The obtained plain weave fabric had flattened shaped warp yarns and weft yarns. Table 5 shows performance evaluation of the obtained plain weave fabric.

### Comparative Example 2

A plain weave fabric was prepared from Nylon 66 filaments (average single fiber diameter: 27 µm; number of single fibers per fiber yarn: 72; twist number: 20 turns/10 cm; fiber tenacity: 9.2 cN/dtex; manufactured by Toray Industries, Inc.) as polyamide series fiber yarns for warp yarns and weft yarns. The obtained plain weave fabric had flattened shaped warp yarns and weft yarns. Table 5 shows performance evaluation of the obtained plain weave fabric.

### Comparative Example 3

A plain weave fabric was prepared from "Kevlar" ^{™} filaments (average single fiber diameter: 12 µm; number of single fibers per fiber yarn: 267; twist number: 15 turns/10 cm; fiber tenacity: 20.4 cN/dtex; manufactured by DU PONT-TORAY CO., LTD.) as aromatic polyamide series fiber yarns for warp yarns and weft yarns. The obtained plain weave fabric had flattened shaped warp yarns and weft yarns. Table 5 shows performance evaluation of the obtained plain weave fabric.

### Comparative Example 4

A plain weave fabric was prepared from Vinylon filaments (average single fiber diameter: 16 µm; number of single fibers per fiber yarn: 200; twist number: 15 turns/10 cm; fiber tenacity: 10.2 cN/dtex; manufactured by Kuraray Co., Ltd.) as polyvinyl alcohol series fiber yarns for warp yarns and weft yarns. The obtained plain weave fabric had flattened shaped warp yarns and weft yarns. Table 5 shows performance evaluation of the obtained plain weave fabric.

### Comparative Example 5

A cord fabric was prepared from "Vectran" ^{™} filaments (average single fiber diameter: 23 µm; number of single fibers per fiber yarn: 100; twist number: 15 turns/10 cm; fiber tenacity: 22.9 cN/dtex; manufactured by Kuraray Co., Ltd.) as liquid crystalline polyester fiber yarns for warp yarns and weft yarns. The obtained cord fabric had flattened shaped warp yarns. Table 5 shows performance evaluation of the obtained cord fabric.

**[Table 5]**

| | | Ex. 1 | Ex. 2 | Ex. 3 | Ex. 4 | Com. Ex 1 | Com. Ex 2 | Com. Ex 3 | Com. Ex 4 | Com. Ex 5 |
|---|---|---|---|---|---|---|---|---|---|---|
| Fiber yarn | | Vectran | Vectran | Vectran | Vectran | Vectran | Nylon | Kevlar | Vinylon | Vectran |
| Fiber tenacity | cN/dtex | 22.9 | 22.9 | 22.9 | 22.9 | 22.9 | 9.2 | 20.4 | 10.2 | 22.9 |
| Number of single fibers | No. | 10 | 27 | 27 | 50 | 48 | 72 | 267 | 200 | 100 |
| Average fiber diameter | µm | 49 | 30 | 43 | 32 | 23 | 27 | 12 | 16 | 23 |
| [No. of single fibers] × [Avg. fiber diameter] | No. µm | 490 | 810 | 1161 | 1600 | 1104 | 1944 | 3204 | 3200 | 2300 |
| Twist number | T/10 cm | 10 | 10 | 15 | 15 | 10 | 20 | 15 | 15 | 15 |
| Weaving configuration | | plain | plain | cord | cord | plain | plain | plain | plain | cord |
| Density of warp yarns | No. 12.54 cm | 76 | 76 | 77 | 77 | 76 | 54 | 58 | 51 | 77 |
| Thread width | mm | 0.37 | 0.39 | 0.37 | 0.39 | 0.40 | 0.44 | 0.31 | 0.50 | 0.40 |
| Basis weight | g/m² | 114 | 114 | 159 | 159 | 114 | 165 | 166 | 161 | 159 |
| Thickness of woven fabric | mm | 0.22 | 0.19 | 0.25 | 0.23 | 0.19 | 0.36 | 0.30 | 0.32 | 0.22 |
| Maximum load | N | 1120 | 910 | 1076 | 890 | 820 | 547 | 378 | 479 | 820 |

| | | | | | | | | | | |
|---|---|---|---|---|---|---|---|---|---|---|
| plain: plain weave fabric, cord: cord fabric | | | | | | | | | | |

As shown in Table 5, in comparison of Examples 1 and 2 with Comparative Example 1, Examples 1 and 2 exhibited higher fracture resistance than Comparative Example 1 although all of them were plain weave fabrics constituted by liquid crystalline polyester fiber yarns and had similar basis weight from each other. Considering of Patent Document 1 recitation that thinner single fibers led to better adhesiveness with the rubber compound, resulting in improvement in perforation, it is surprising that Examples 1 and 2 each comprising fiber yarns having thicker fiber diameter than that of Comparative Example 1 unexpectedly achieved higher fracture resistance of the plain weave fabrics in which vulcanized rubber layers were provided on both sides of the plain weave fabrics.

In addition, in comparison of Examples 3 and 4 with Comparative Example 5, Examples 3 and 4 exhibited higher fracture resistance than Comparative Example 5 although all of them were cord fabrics constituted by liquid crystalline polyester fiber yarns and had similar basis weight from each other. In particular, it is unexpected results that although the number of single fibers was increased in order to overcome the fineness of the single fibers in Comparative Example 5, fracture resistance of Examples 3 and 4 was higher than that of Comparative Example 5.

As was expected, Comparative Examples 2 and 4 exhibited inferior fracture resistances compared to Examples 1 and 2 with higher tenacity than Comparative Examples 2 and 4. On the other hand, although Comparative Example 3 exhibited similar fiber tenacity with that of Examples 1 and 2, Examples 1 and 2 showed unexpectedly higher fracture resistance than that of Comparative Example 3.

In addition, although the woven fabric constituted by Vinylon fiber yarns was recited as Comparative Example 4, the woven fabric shows excellent puncture resistance subjected to penetration test using injection needle (diameter: 18G in which outer diameter of the needle of 1.2 mm; length: 38 mm, needle tip shape: regular bevel in which angle of a blade surface at a tip end portion of 12 degree) instead of plunger. Accordingly, when such a woven fabric is used together with a woven fabric constituted by liquid crystalline polyester fiber yarns, a reinforcing ply which has fracture resistance and puncture resistance in a compatible manner can be achieved.

### INDUSTRIAL APPLICABILITY

The reinforcing ply (plies) of the present invention can be advantageously used to enhance puncture resistance of a bicycle tire and can be suitably applied to bicycle tires of various bicycles, including city cycles, electrically assisted bicycles, road racing bicycles, mountain bikes, hybrid bicycles (comfort bicycles), touring bicycles, recumbent bicycles, and foldable bicycles.

### REFERENCE NUMERALS

100, 200, 300 ···· bicycle tire
12, 22, 32 ···· tread part
14, 24, 34 ···· reinforcing ply
16, 26, 36 ···· carcass part
15 ···· sidewall part
17 ···· bead part
18 ···· bead wire

## Claims

1. A bicycle-tire reinforcing ply (14, 24, 34) comprising a woven fabric that comprises liquid crystalline polyester fiber yarns, wherein each of the fiber yarns comprises three or more single fibers having an average fiber diameter of 25 µm or larger, and the fiber yarns satisfies the following formula: [No. of single fibers per fiber yarn] × [average fiber diameter (µm)] ≤ 1700, wherein the reinforcing ply (14, 24, 34) comprises the liquid crystalline polyester fiber yarns as flattened warp yarns and/or flattened weft yarns, and the warp yarns and/or weft yarns have a thread width of 0.1 to 3.0 mm.

2. The reinforcing ply (14, 24, 34) according to claim 1, wherein a specimen of the reinforcing ply (14, 24, 34) has a maximum load of 850 N or more in a penetration test,
wherein the specimen is prepared by superposing unvulcanized rubber sheets on both surfaces of the woven fabric and heating the superposed material under pressure to make the rubber sheets vulcanized, and wherein the specimen is 15 cm long, and 15 cm wide and about 2 mm thick; in the penetration test a plunger being a cylindrical object with a spherical tip with a diameter of 8 mm is applied to the center of the woven fabric in the condition that the periphery of the specimen, excluding a circle having a diameter of 40 mm at the center of the specimen, is fixed.

3. The reinforcing ply (14, 24, 34) according to claim 1 or 2, wherein the woven fabric is a plain weave fabric or a cord fabric.

4. The reinforcing ply (14, 24, 34) according to any one of claims 1 to 3, wherein the woven fabric is constituted by mutually intersecting the liquid crystalline polyester fiber yarns.

5. The reinforcing ply (14, 24, 34) according to any one of claims 1 to 4, wherein the crystalline polyester fiber yarn has a twist number of 1 to 30 turns/10 cm.

6. The reinforcing ply (14, 24, 34) according to any one of claims 1 to 5, wherein the number of single fibers per said fiber yarn is 29 or less.

7. The reinforcing ply (14, 24, 34) according to any one of claims 1 to 6, wherein the single fibers have an average fiber diameter of 40 µm or larger.

8. The reinforcing ply (14, 24, 34) according to any one of claims 1 to 7, further comprising a woven fabric of polyvinyl alcohol-series fiber yarns, each of the fiber yarns comprising a plurality of single fibers having an average fiber diameter of 45 µm or smaller.

9. A bicycle tire (100, 200, 300) at least comprising: a tread part (12, 22, 32) provided to a ground contact surface of the bicycle tire (100, 200, 300); and a carcass part (16, 26, 36) provided inside the tread part (12, 22, 32), wherein the bicycle tire (100, 200, 300) comprises a reinforcing ply (14, 24, 34) as recited in any one of claims 1 to 8 in at least one position selected from between the tread part (12, 22, 32) and the carcass part (16, 26, 36), inside the carcass part (16, 26, 36), and inside the tread part (12, 22, 32).

## Patentansprüche

1. Fahrradreifenverstärkungslage (14, 24, 34), umfassend ein Gewebe, das flüssigkristalline Polyesterfasergarne umfasst, wobei jedes der Fasergarne drei oder mehr Einzelfasern mit einem durchschnittlichen Faserdurchmesser von 25 µm oder mehr umfasst und die Fasergarne die folgende Formel erfüllen: [Anzahl der Einzelfasern pro Fasergarn] × [durchschnittlicher Faserdurchmesser (µm)] ≤ 1700, wobei die Verstärkungslage (14, 24, 34) die flüssigkristallinen Polyesterfasergame als abgeflachte Kettfäden und/oder abgeflachte Schussfäden umfasst und die Kettfäden und/oder Schussfäden eine Fadenbreite von 0,1 bis 3,0 mm aufweisen.

2. Verstärkungslage (14, 24, 34) nach Anspruch 1, wobei ein Probestück der Verstärkungslage (14, 24, 34) eine maximale Belastung von 850 N oder mehr in einem Durchdringungstest aufweist,
wobei das Probestück hergestellt ist, indem unvulkanisierte Gummilagen auf beiden Oberflächen des Gewebes übereinandergelegt werden und das übereinandergelegte Material unter Druck erwärmt wird, um die Gummilagen zu vulkanisieren, und wobei die Probe 15 cm lang und 15 cm breit und etwa 2 mm dick ist; wobei bei dem Durchdringungstest ein Kolben, der ein zylindrisches Objekt mit einer kugelförmigen Spitze mit einem Durchmesser von 8 mm ist, in der Mitte des Gewebes unter der Bedingung aufgebracht wird, dass der Umfang des Probestücks, mit Ausnahme eines Kreises mit einem Durchmesser von 40 mm in der Mitte des Probestücks, fixiert ist.

3. Verstärkungslage (14, 24, 34) nach Anspruch 1 oder 2, wobei das Gewebe ein Leinengewebe oder ein Cordgewebe ist.

4. Verstärkungslage (14, 24, 34) nach einem der Ansprüche 1 bis 3, wobei das Gewebe durch gegenseitiges Kreuzen der flüssigkristallinen Polyesterfasergarne gebildet ist.

5. Die Verstärkungslage (14, 24, 34) nach einem der Ansprüche 1 bis 4, wobei das kristalline Polyesterfasergarn eine Drehungszahl von 1 bis 30 Drehungen/10 cm aufweist.

6. Verstärkungslage (14, 24, 34) nach einem der Ansprüche 1 bis 5, wobei die Anzahl der Einzelfasern pro Fasergarn 29 oder weniger beträgt.

7. Verstärkungslage (14, 24, 34) nach einem der Ansprüche 1 bis 6, wobei die Einzelfasern einen durchschnittlichen Faserdurchmesser von 40 µm oder mehr aufweisen.

8. Verstärkungslage (14, 24, 34) nach einem der Ansprüche 1 bis 7, weiter umfassend ein Gewebe aus Fasergarnen der Polyvinylalkohol-Reihe, wobei jedes der Fasergarne eine Mehrzahl von Einzelfasern mit einem durchschnittlichen Faserdurchmesser von 45 µm oder weniger umfasst.

9. Fahrradreifen (100, 200, 300), der mindestens umfasst: einen Laufflächenteil (12, 22, 32), der an einer Bodenkontaktfläche des Fahrradreifens (100, 200, 300) bereitgestellt ist; und einen Karkassenteil (16, 26, 36), der innerhalb des Laufflächenteils (12, 22, 32) bereitgestellt ist, wobei der Fahrradreifen (100, 200, 300) eine Verstärkungslage (14, 24, 34) nach einem der Ansprüche 1 bis 8 an mindestens einer telle, ausgewählt aus zwischen dem Laufflächenteil (12, 22, 32) und dem Karkassenteil (16, 26, 36), innerhalb des Karkassenteils (16, 26, 36) und innerhalb des Laufflächenteils (12, 22, 32), umfasst.

## Revendications

1. Nappe de renforcement de pneu de bicyclette (14, 24, 34) comprenant un tissu tissé qui comprend des fils de fibres de polyester à cristaux liquides, dans laquelle chacun des fils de fibres comprend trois fibres simples ou plus ayant un diamètre moyen de la fibre supérieur ou égal à 25 µm, et les fils de fibres satisfont la formule suivante : [nombre de fibres simples par fil de fibres] × [diamètre moyen de la fibre (µm)] ≤ 1 700, dans laquelle la nappe de renforcement (14, 24, 34) comprend les fils de fibres de polyester à cristaux liquides en tant que fils de chaîne aplatis et/ou fils de trame aplatis, et les fils de chaîne et/ou les fils de trame ont une largeur de fil de 0,1 à 0,3 mm.

2. Nappe de renforcement (14, 24, 34) selon la revendication 1, dans laquelle un échantillon de la nappe de renforcement (14, 24, 34) a une charge maximale supérieure ou égale à 850 N lors d'un essai de pénétration,
dans laquelle l'échantillon est préparé par superposition de feuilles de caoutchouc non vulcanisé sur les deux surfaces du tissu tissé et chauffage du matériau superposé sous pression pour rendre vulcanisées les feuilles de caoutchouc, et dans laquelle l'échantillon est long de 15 cm et large de 15 cm et épais d'environ 2 mm ; lors de l'essai de pénétration, un piston étant un objet cylindrique avec une pointe sphérique avec un diamètre de 8 mm est appliqué sur le centre du tissu tissé sous la condition que la périphérie de l'échantillon, à l'exclusion d'un cercle ayant un diamètre de 40 mm au centre de l'échantillon, soit fixe.

3. Nappe de renforcement (14, 24, 34) selon la revendication 1 ou 2, dans laquelle le tissu tissé est un tissu à armure unie ou un tissu câblé.

4. Nappe de renforcement (14, 24, 34) selon l'une quelconque des revendications 1 à 3, dans laquelle le tissu tissé est construit par l'entrecroisement mutuel des fils de fibres de polyester à cristaux liquides.

5. Nappe de renforcement (14, 24, 34) selon l'une quelconque des revendications 1 à 4, dans laquelle le fil de fibres de polyester cristallin a un nombre de torsions de 1 à 30 torsions/10 cm.

6. Nappe de renforcement (14, 24, 34) selon l'une quelconque des revendications 1 à 5, dans laquelle le nombre de fibres simples par fil de fibres est inférieur ou égal à 29.

7. Nappe de renforcement (14, 24, 34) selon l'une quelconque des revendications 1 à 6, dans laquelle les fibres simples ont un diamètre moyen de la fibre supérieur ou égal à 40 µm.

8. Nappe de renforcement (14, 24, 34) selon l'une quelconque des revendications 1 à 7, comprenant en outre un tissu tissé de fils de fibres de série alcool polyvinylique, chacun des fils de fibres comprenant une pluralité de fibres simples ayant un diamètre moyen de la fibre inférieur ou égal à 45 µm.

9. Pneu de bicyclette (100, 200, 300) comprenant au moins : une partie bande de roulement (12, 22, 32) disposée sur une surface de contact avec le sol du pneu de bicyclette (100, 200, 300) ; et une partie carcasse (16, 26, 36) disposée à l'intérieur de la partie bande de roulement (12, 22, 32), dans lequel le pneu de bicyclette (100, 200, 300) comprend une nappe de renforcement (14, 24, 34) telle que définie dans l'une quelconque des revendications 1 à 8, dans au moins une position sélectionnée parmi entre la partie bande de roulement (12, 22, 32) et la partie carcasse (16, 26, 36), à l'intérieur de la partie carcasse (16, 26, 36) et à l'intérieur la partie bande de roulement (12, 22, 32).
